# EUROPEAN PATENT APPLICATION

(11) **EP 4 635 819 A1**
(43) Date of publication of application: **22.10.2025**
(21) Application number: 23902807.9
(22) Date of filing: 14.12.2023
(51) Int. Cl.: B60W 60/00, B60W 30/18

(54) **VEHICLE CONTROL METHOD AND APPARATUS, DEVICE AND COMPUTER-READABLE STORAGE MEDIUM**

(30) Priority: 15.12.2022 CN 202211613165
(71) Applicant: Guangzhou Xiaopeng Autopilot Technology Co., Ltd., Guangzhou, Guangdong 510000 (CN)
(72) Inventor: WU, Haotao, Guangzhou, Guangdong 510000 (CN); XIAO, Zhichong, Guangzhou, Guangdong 510000 (CN); LI, Yang, Guangzhou, Guangdong 510000 (CN); FAN, Qi, Guangzhou, Guangdong 510000 (CN); QIU, Jie, Guangzhou, Guangdong 510000 (CN)
(74) Representative: Isarpatent
(86) International application number: PCT/CN2023/138936
(87) International publication number: WO 2024/125614

(57) **Abstract**

The present application discloses a vehicle control method and apparatus, a device, and a computer-readable storage medium. The vehicle control method comprises: collecting vehicle stream information within a preset distance range of a target vehicle, the vehicle stream information comprising at least the vehicle stream information of a first lane where the target vehicle is located and an adjacent second lane; determining traffic conditions of the first lane and the second lane according to the vehicle stream information; identifying a vehicle ahead and a vehicle behind that are close to the target vehicle in the second lane according to the vehicle stream information, when the traffic conditions are that the first lane is in a congested state and the second lane is in a smooth state; acquiring a first longitudinal distance between the vehicle ahead and the target vehicle and acquiring a second longitudinal distance between the vehicle behind and the target vehicle; and controlling the target vehicle to switch to the second lane for traveling, when both the first longitudinal distance and the second longitudinal distance are greater than a preset vehicle distance threshold.

## Description

### CROSS-REFERENCE TO RELATED APPLICATION

The present application claims priority to Chinese Patent Application No. 202211613165.7, filed on December 15, 2022, the entire contents of which are incorporated herein by reference.

### TECHNICAL FIELD

The present application relates to the field of computer technology, and specifically to a vehicle control method and apparatus, a device, and a computer-readable storage medium.

### BACKGROUND

With the development of autonomous driving technology, the autonomous driving technology has been widely used in vehicles, which improves the user's driving experience. Among other things, the autonomous driving technology may combine navigation information and environment sensing information to guide a vehicle to travel. For example, when an obstacle obstructing the vehicle' forwarding is encountered in the traveling direction of the vehicle, the related technology carries out a detour strategy through the real-time navigation information and environment sensing information, to guide the vehicle to travel by bypassing the obstacle, in order to ensure the safety of driving the vehicle.

However, while the related technology may identify the obstacle ahead and detour through the navigation information and environment sensing information, it is unable to prejudge a traffic congestion scenario in the traveling direction in the process of driving the vehicle, thus making it impossible to cope with the traffic congestion scenario through the detour strategy when the vehicle enters the traffic congestion scenario, which reduces the vehicle' passage efficiency, and thereby, affects the user's driving experience.

### SUMMARY

Embodiments of the present application provide a vehicle control method and apparatus, a device, and a computer-readable storage medium that can prejudge a congestion situation ahead of a vehicle in advance to avoid a traffic congestion situation in the traveling direction of the vehicle, which improves the vehicle's passage efficiency and enhances the user's driving experience.

An embodiment of the present application provides a vehicle control method, comprising:
collecting vehicle stream information within a preset distance range of a target vehicle, the vehicle stream information comprising at least the vehicle stream information of a first lane where the target vehicle is located and an adjacent second lane;
determining traffic conditions of the first lane and the second lane according to the vehicle stream information;
identifying a vehicle ahead and a vehicle behind that are close to the target vehicle in the second lane according to the vehicle stream information, when the traffic conditions are that the first lane is in a congested state and the second lane is in a smooth state;
acquiring a first longitudinal distance between the vehicle ahead and the target vehicle and acquiring a second longitudinal distance between the vehicle behind and the target vehicle; and
controlling the target vehicle to switch to the second lane for traveling, when both the first longitudinal distance and the second longitudinal distance are greater than a preset vehicle distance threshold.

Accordingly, an embodiment of the present application provides a vehicle control apparatus, comprising:
a collection unit for collecting vehicle stream information within a preset distance range of a target vehicle, the vehicle stream information comprising at least the vehicle stream information of a first lane where the target vehicle is located and an adjacent second lane;
a determination unit for determining traffic conditions of the first lane and the second lane according to the vehicle stream information;
an identification unit for identifying a vehicle ahead and a vehicle behind that are close to the target vehicle in the second lane according to the vehicle stream information, when the traffic conditions are that the first lane is in a congested state and the second lane is in a smooth state;
an acquisition unit for acquiring a first longitudinal distance between the vehicle ahead and the target vehicle, and determining a second longitudinal distance between the vehicle behind and the target vehicle; and
a control unit for controlling the target vehicle to switch to the second lane for traveling, when both the first longitudinal distance and the second longitudinal distance are greater than a preset vehicle distance threshold.

In some embodiments, the determination unit is further used for:
determining a first vehicle stream speed in front of the target vehicle in the first lane based on the vehicle stream information, and determining the traffic condition of the first lane according to the first vehicle stream speed; and
determining a second vehicle stream speed in front of the target vehicle in the second lane based on the vehicle stream information and determining the traffic condition of the second lane according to the first vehicle stream speed and the second vehicle stream speed.

In some embodiments, the determination unit is further used for:
comparing the first vehicle stream speed with a preset vehicle speed threshold;
determining that the traffic condition of the first lane is the congested state if the first vehicle stream speed is less than the preset vehicle speed threshold; and
determining that the traffic condition of the first lane is the smooth state if the first vehicle stream speed is greater than or equal to the preset vehicle speed threshold.

In some embodiments, the determination unit is further used for:
determining a speed difference between the second vehicle stream speed and the first vehicle stream speed, and determining a speed ratio between the second vehicle stream speed and the first vehicle stream speed;
determining that the traffic condition of the second lane is the smooth state if the speed difference is greater than a preset speed difference threshold and the speed ratio is greater than a preset speed ratio threshold; and
determining that the traffic condition of the second lane is the congested state if the speed difference is less than the preset speed difference threshold or the speed ratio is less than the preset speed ratio threshold.

In some embodiments, the identification unit is further used for:
acquiring a set of images corresponding to the current vehicle stream information;
selecting a first image containing information on the vehicle ahead of the target vehicle, and selecting a second image containing information on the vehicle behind of the target vehicle, from the set of images;
identifying the vehicle ahead that is close to the target vehicle in the second lane from the first image; and
identifying the vehicle behind that is close to the target vehicle in the second lane from the second image.

In some embodiments, the acquisition unit is further used for:
identifying a target distance between the vehicle ahead and the target vehicle within a preset duration;
determining a positional distribution relationship between the vehicle ahead and the target vehicle; and
determining the first longitudinal distance between the vehicle ahead and the target vehicle according to the target distance and the positional distribution relationship.

In some embodiments, the vehicle control apparatus further comprises a first judgment unit for:
acquiring a current travel planning path of the target vehicle, and building a pre-planned path of the target vehicle on the second lane according to the travel planning path; and
determining a path distance corresponding to the pre-planned path,
then the controlling the target vehicle to switch to the second lane for traveling, comprises:
   if the path distance is greater than or equal to a preset distance threshold, controlling the target vehicle to switch to the second lane for traveling.

In some embodiments, the vehicle control apparatus further comprises a second judgment unit for:
acquiring a current travel planning path of the target vehicle, and determining a traveling control strategy for the target vehicle within a preset path distance according to the travel planning path; and
determining a first priority of the first lane and a second priority of the second lane according to the traveling control strategy,
then the controlling the target vehicle to switch to the second lane for traveling, comprises:
   if the second priority is greater than or equal to the first priority, controlling the target vehicle to switch to the second lane for traveling.

Furthermore, an embodiment of the present application provides a computer device comprising a processor and a memory, the memory storing a computer program, the processor being used to execute the computer program in the memory to implement steps in the vehicle control method according to the embodiment of the present application.

Furthermore, an embodiment of the present application provides a computer-readable storage medium, the computer-readable storage medium storing a plurality of instructions, which are adapted to be loaded by a processor to perform steps in the vehicle control method according to the embodiment of the present application.

Furthermore, an embodiment of the present application provides a computer program product comprising computer instructions, which are stored in a computer-readable storage medium. The processor of the computer device reads the computer instructions from the computer-readable storage medium, and the processor executes the computer instructions such that the computer device performs steps in any of the vehicle control methods according to the embodiments of the present application.

The embodiments of the present application collect vehicle stream information within a preset distance range of a target vehicle, the vehicle stream information comprising at least the vehicle stream information of a first lane where the target vehicle is located and an adjacent second lane; determine traffic conditions of the first lane and the second lane according to the vehicle stream information; identify a vehicle ahead and a vehicle behind that are close to the target vehicle in the second lane according to the vehicle stream information, when the traffic conditions are that the first lane is in a congested state and the second lane is in a smooth state; acquire a first longitudinal distance between the vehicle ahead and the target vehicle and acquire a second longitudinal distance between the vehicle behind and the target vehicle; and control the target vehicle to switch to the second lane for traveling, when both the first longitudinal distance and the second longitudinal distance are greater than a preset vehicle distance threshold. It can be concluded that the present solution may first acquire vehicle stream information around the target vehicle to determine traffic conditions of a lane where the target vehicle is currently located and an adjacent lane according to the vehicle stream information, and then, identify a vehicle ahead and a vehicle behind relative to the target vehicle in the adjacent lane when it is determined that the lane where the target vehicle is currently located is a congested state and the adjacent lane is a smooth state, to determine longitudinal distances between the vehicle ahead and the vehicle behind and the target vehicle, respectively, and finally, control the target vehicle to change the lane to the second lane for traveling when the longitudinal distances are greater than a preset vehicle distance threshold, whereby prejudging a congestion situation ahead of the vehicle in advance in order to avoid a traffic congestion situation in the traveling direction of the vehicle, which improves the vehicle' passage efficiency, and enhances the user's driving experience.

### BRIEF DESCRIPTION OF THE DRAWINGS

In order to more clearly illustrate technical solutions in the embodiments of the present application, the accompanying drawings used in the description of the embodiments will be simply introduced below, and it is apparent that the accompanying drawings in the following description are only some embodiments of the present application, and for those skilled in the art, other accompanying drawings can be obtained based on these drawings without creative work.
FIG. 1 is a schematic diagram of a scenario of a vehicle control system according to an embodiment of the present application;
FIG. 2 is a schematic flow chart of steps of a vehicle control method according to an embodiment of the present application;
FIG. 3 is another schematic flow chart of steps of a vehicle control method according to an embodiment of the present application;
FIG. 4 is a schematic diagram of a structure of a vehicle control apparatus according to an embodiment of the present application; and
FIG. 5 is a schematic diagram of a structure of a computer device according to an embodiment of the present application.

### DETAILED DESCRIPTION

The technical solution in the embodiments of the present application will be clearly and completely described below in conjunction with the accompanying drawings in the embodiments of the present application. Obviously, the described embodiments are merely a part of the embodiments of the present application, and not all of them. Based on the embodiments in the present application, all other embodiments obtained by those skilled in the art without making creative labor fall within the scope of protection of the present application.

The embodiments of the present application provide a vehicle control method and apparatus, a device, and a computer-readable storage medium. The embodiments of the present application will be described from the perspective of the vehicle control apparatus, which may specifically be integrated in the computer device, which may be a terminal device, specifically a terminal device mounted on a means of transportation, i.e., a vehicle-mounted terminal. Furthermore, the terminal device may be other types of devices. For example, the terminal may be a television, a smartphone, a tablet computer, a laptop computer, a desktop computer, a smart speaker, a smart watch, a smart wearable device, and the like, but is not limited thereto.

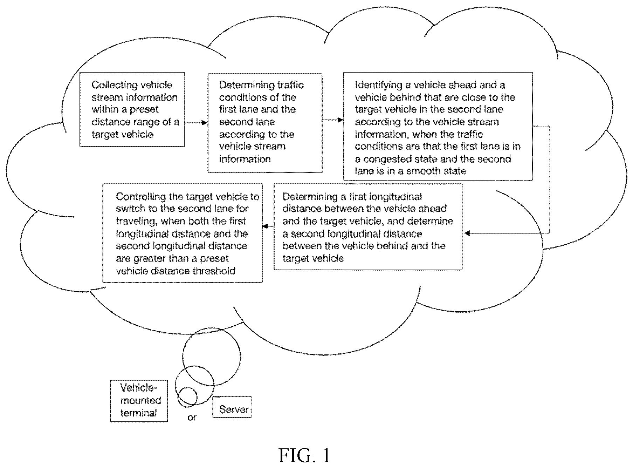

For example, please see FIG. 1, which is a schematic diagram of a scenario of a vehicle control system according to an embodiment of the present application. The scenario includes a terminal or a server.

Specifically, the terminal may be a vehicle-mounted terminal that is used to collect vehicle stream information within a preset distance range of a target vehicle, the vehicle stream information comprising at least the vehicle stream information of a first lane where the target vehicle is located and an adjacent second lane; determine traffic conditions of the first lane and the second lane according to the vehicle stream information; identify a vehicle ahead and a vehicle behind that are close to the target vehicle in the second lane according to the vehicle stream information, when the traffic conditions are that the first lane is in a congested state and the second lane is in a smooth state; acquire a first longitudinal distance between the vehicle ahead and the target vehicle and acquire a second longitudinal distance between the vehicle behind and the target vehicle; and control the target vehicle to switch to the second lane for traveling, when both the first longitudinal distance and the second longitudinal distance are greater than a preset vehicle distance threshold.

It is to be noted that when the vehicle control system includes a server, then a communication connection between the vehicle-mounted terminal and the server may be established. The vehicle-mounted terminal may collect the vehicle stream information within the preset distance range of the target vehicle, the vehicle stream information comprising at least the vehicle stream information of the first lane where the target vehicle is located and the adjacent second lane, and transmit the collected vehicle stream information to the server. At this time, the server may receive the vehicle stream information transmitted by the vehicle-mounted terminal, and determine traffic conditions of the first lane and the second lane according to the vehicle stream information; identify a vehicle ahead and a vehicle behind that are close to the target vehicle in the second lane according to the vehicle stream information, when the traffic conditions are that the first lane is in a congested state and the second lane is in a smooth state; acquire a first longitudinal distance between the vehicle ahead and the target vehicle and acquire a second longitudinal distance between the vehicle behind and the target vehicle; and determine that distances between the target vehicle and the vehicle ahead and the vehicle behind in the adjacent second lane are safe when both the first longitudinal distance and the second longitudinal distance are greater than the preset vehicle distance threshold. That is, the target vehicle can make a lane change through a space of the safe distance, at which time then the server may transmit, to the vehicle-mounted terminal, a lane change control strategy or instruction to switch to the second lane. So, after receiving the lane change control strategy or instruction from the server, the vehicle-mounted terminal carries out the lane change control strategy or instruction to control the target vehicle to switch to the second lane for traveling.

Accordingly, the vehicle control method may comprise steps of: acquiring the vehicle stream information around the target vehicle, determining traffic conditions of the lanes, determining spacings between vehicles ahead and behind in a lane being the smooth state, performing a lane change when the spacings between the vehicles ahead and behind satisfy a condition for lane change, and the like.

For convenience of understanding, the following example of changing the lane while the vehicle is traveling is described for the embodiments of the present application as follows.

Exemplarily, the target vehicle is mounted with an vehicle-mounted terminal, which may collect/acquire surrounding vehicle stream information in real time, where the vehicle stream information contains at least information about traffic volumes in lanes such as the lane where the target vehicle is located, an adjacent left lane or an adjacent right lane, to represent the traffic volumes nearby the target vehicle. Then, the vehicles which are traveling in a corresponding lane may be determined according to the vehicle stream information in order to subsequently determine whether the respective lanes are congested, e.g., to determine whether the corresponding lane is congested according to the speeds of vehicles in each lane, and if the speeds of vehicles ahead of the vehicle are lower than a certain value, and at the same time the speeds of vehicles ahead in the adjacent lane(s) are faster, it means that the adjacent lane(s) is(are) more smoother than the current traveling lane. Further, longitudinal distances between the vehicle and the vehicles ahead and behind in the adjacent lane(s) and the target vehicle are acquired to determine that the longitudinal distances between the vehicles ahead and behind in the adjacent lane(s) are all at a safe distance value, e.g., in the adjacent lane(s), there are two vehicles around the target vehicle traveling in the adjacent lane(s), i.e., traveling in the front left (or front right) and rear left (or rear right) of the target vehicle respectively, and further, to determine the distances between the vehicles ahead and behind, in order to determine whether there is a sufficient space between the vehicles ahead and behind. Finally, when there is a sufficient space, the target vehicle is controlled to safely switch to a more smooth adjacent lane for traveling.

The following are described in detail separately. It is to be noted that the following order of description of the embodiments does not serve as a limitation on the preferred order of the embodiments.

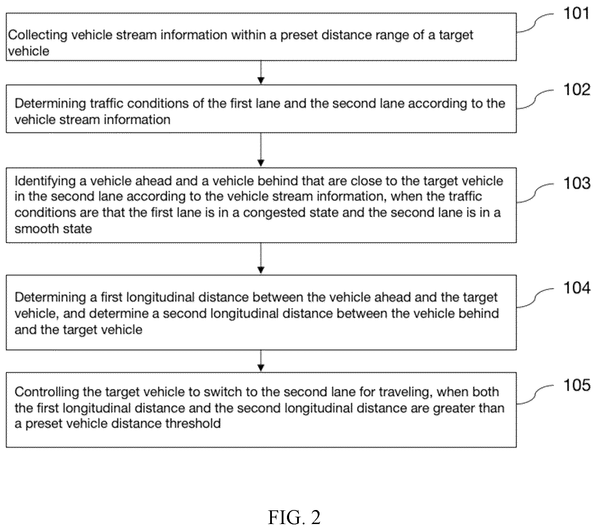

In the embodiments of the present application, the description will be made from the perspective of a vehicle control apparatus to the extent that the vehicle control apparatus may specifically be integrated in a computer device such as a terminal device or a server. Please see FIG. 2, which is a schematic flow chart of steps of a vehicle control method according to an embodiment of the present application. By taking a terminal device as an example, the terminal device is a terminal mounted on a vehicle, and when a processor on the terminal device executes a program corresponding to the vehicle control method, a specific flow of the vehicle control method is as follows.

101. Collect vehicle stream information within a preset distance range of a target vehicle, the vehicle stream information comprising at least the vehicle stream information of a first lane where the target vehicle is located and an adjacent second lane.

In the embodiments of the present application, in order to make it possible to prejudge in advance whether the lane in which the target vehicle is currently traveling is congested, and then to determine whether to make a lane change, the vehicle stream information of the lane (the first lane) in which the vehicle is traveling and an adjacent lane (the second lane) can be utilized to prejudge whether the lane is congested, and then make the lane change in advance to avoid congestion, so as to make the vehicle's passage efficiency improved.

Herein, the target vehicle may be a means of transportation with carrying capability, such as a car, a two-wheeled vehicle, a three-wheeled vehicle, an electric vehicle, etc., and the target vehicle is mounted with a vehicle-mounted terminal, and the vehicle-mounted terminal may control the corresponding software or hardware to acquire lane information and make the lane change.

Herein, the first lane may be a lane in which the target vehicle is traveling.

Herein, the second lane may be an adjacent lane of the lane in which the target vehicle is traveling, and may also be other parallel spaced lane(s). For example, when the target vehicle is traveling on a highway with multiple parallel lanes, such as comprising 5 parallel lanes, with the first lane currently occupied by the target vehicle as the middle lane and being assumed to be lane #3, the second lane may be the lane adjacent to the left of that first lane (lane #4) or the right of that first lane (lane #2). Furthermore, the adjacent lane may be a lane that is spaced apart from the first lane, such as lane #1 and lane #5, which are not limited herein.

Herein, the vehicle stream information may be used to represent a vehicle stream speed (passing speed) in the corresponding lane, which may reflect the overall smooth or congested condition of each lane, and it can be understood that the vehicle stream information generally represents the vehicle speeds of one or more vehicles in the corresponding lane. Specifically, the vehicle stream information may contain information on a volume of vehicles traveling in the lane in which the target vehicle is traveling as well as in its adjacent/surrounding lane(s), and the vehicle stream information is not limited to including information on vehicles in the lanes, the number of vehicles, the traveling direction of vehicles, the vehicle speeds, and the like.

Specifically, when the target vehicle is traveling, the vehicle-mounted terminal may take the target vehicle as the center and collect the vehicle stream information on lanes within a preset distance range in real time, such as through an information collection component (a lidar, a camera component, etc.). For another example, the vehicle stream information is determined on vehicle passage data in each lane in an electronic navigation map. By taking the information collection component as an example, in general, the information collection component mainly collects the vehicle stream information in the lane in which the target vehicle is traveling as well as the vehicle stream information of nearby lane(s). For example, a vehicle A utilizes a sensor located at the front end of the vehicle body to keep detecting a speed and traveling direction of a vehicle within 20 meters ahead of the lane in which the vehicle is traveling in 5 seconds and determine them as the vehicle stream information of the first lane, and at the same time, utilizes the sensor located at the front end of the vehicle body to keep detecting a speed and traveling direction of a vehicle within 20 meters behind the lane in which the vehicle is traveling in 5 seconds and determine them as the vehicle stream information of the second lane.

In the above manner, the vehicle stream information within the preset distance range of the target vehicle can be collected so as to subsequently acquire vehicle passing situations of the lane(s) around the target vehicle according to the vehicle stream information, so as to subsequently prejudge the traffic conditions of the lane where the target vehicle is located as well as other adjacent lane(s).

102. Determine traffic conditions of the first lane and the second lane according to the vehicle stream information.

In the embodiments of the present application, in order to enable a vehicle to prejudge in advance whether there is congestion, the collected vehicle stream information can be used to prejudge the traffic condition of the current lane of the target vehicle, e.g., being in a congested or smooth state, and whether the nearby (adjacent) lane(s) is(are) smooth, so as to subsequently make a preparation in order for the target vehicle to change the lane to a non-congested lane in advance, to achieve the purpose of avoiding a congested road section, and to enhance the vehicle's passage safety and the user's driving experience.

Herein, the traffic conditions may refer to a traffic operation condition of certain lane or certain region, and may indicate an occupied state of the corresponding lane, which may include at least two conditions of "congested" and "non-congested (smooth)".

In the embodiments of the present application, the vehicle-mounted terminal, after acquiring the vehicle stream information of the first lane and the second lane, may judge the current traffic conditions of the first lane and the second lane according to the acquired vehicle stream information. Specifically, the vehicle-mounted terminal of the vehicle, after acquiring the vehicle stream information of the currently traveling lane and the adjacent lane(s), determines vehicle stream speeds in the currently traveling lane and the adjacent lane(s) respectively according to the vehicle stream information, and determines the traffic condition of the corresponding lane according to the vehicle stream speeds. For example, a vehicle stream speed of the first lane and a vehicle stream speed of the second lane are determined according to the vehicle stream speeds, and assuming that the vehicle stream speeds within a preset duration are all greater than a preset vehicle speed threshold, then it is determined that both the first lane and the second lane are in a non-congested condition, but rather in a smooth condition.

Exemplarily, the preset vehicle speed threshold may be set in advance according to the minimum speed limit of a lane. For example, the minimum speed limit of a low-speed lane of a freeway is 60 km/s, and for another example, the minimum speed limit of a ring road lane in a city is 30 km/s, and thus the preset vehicle speed threshold may be set according to the above minimum speed limits. It can be understood that a vehicle may have different speed limits in different scenarios, and the preset vehicle speed threshold for the lane where the target vehicle is located may be selected based on a target position according to a target position of the target vehicle. In turn, the vehicle stream speed ahead of the lane where the target vehicle is located as well as the vehicle stream speed(s) in the adjacent lane(s) are determined according to the vehicle stream information, and the vehicle stream speeds are compared with the preset vehicle speed threshold, in order to determine the traffic conditions of the lane where the target vehicle is located and the adjacent lane(s), respectively. In addition, in the process of performing the comparison of the vehicle stream speeds, a factor of a duration for comparison may also be added, such that if the vehicle stream speeds ahead are at a normal speed (greater than or equal to the preset vehicle speed threshold) for 5 seconds, it can be determined that the lane in which the target vehicle is currently traveling or the adjacent lane(s) are all in a non-congested road condition, but rather in a congested road condition.

Thus, in some implementations, the traffic conditions in the first lane and the second lane may be determined according to the vehicle stream speeds included in the vehicle stream information. For example, the step 102 "Determine the traffic conditions of the first lane and the second lane according to the vehicle stream information", may comprise:
(102.1) determining a first vehicle stream speed in front of the target vehicle in the first lane based on the vehicle stream information, and determining the traffic condition of the first lane according to the first vehicle stream speed; and
(102.2) determining a second vehicle stream speed in front of the target vehicle in the second lane based on the vehicle stream information, and determining the traffic condition of the second lane according to the second vehicle stream speed.

Herein, the first vehicle stream speed may be an average speed of vehicles ahead of the first lane within a preset duration, and the first vehicle stream speed may be determined according to speeds of one or more vehicles ahead of the target vehicle in the first lane. Specifically, when there is only one vehicle traveling within the preset distance range in front of the target vehicle, the first vehicle stream speed is an average speed of the vehicle ahead within the preset duration. When there are a plurality of vehicles, the first vehicle stream speed may be calculated according to an average speed of the plurality of vehicles ahead of the target vehicle in the first lane within the preset duration, for example, by carrying out a weighted summation. Assuming that there are a plurality of vehicles ahead of the target vehicle in the first lane, the average speed of each of the vehicles within the preset duration may be calculated first, and the weighted summation may be performed on the average speeds of the plurality of vehicles to obtain the first vehicle stream speed.

Herein, the second vehicle stream speed may be an average speed of vehicles ahead of adjacent/surrounding lane(s) of the lane in which the target vehicle is currently traveling, which is determined in the same manner as that of the first vehicle stream speed, and the details are not repeated.

Specifically, when the target vehicle is traveling, first, the vehicle-mounted terminal utilizes a detection component in the vehicle to in real time collect the vehicle stream information of vehicles traveling in front of the lane in which the target vehicle is traveling, and based on the vehicle stream information, determines the speeds of the vehicles ahead within the preset duration based on the vechicle stream information, and in turn, performs a weighted averaging on the speeds of the vehicles traveling in front, thereby identifying the average speed of the vehicles ahead. Similarly, in the adjacent lane(s) of the traveling lane, the vehicle stream information of vehicles ahead is extracted to obtain the speeds of the vehicles, and the average speed thereof is acquired after the weighted averaging. It is to be noted that if there is no a vehicle ahead of the target vehicle in the traveling lane as well as its adjacent lane(s), a value of the average speed is positive infinity by default. Finally, the traffic condition in the lane is determined according to the average speed.

Exemplarily, by taking a vehicle A in an autonomous driving mode as an example, the vehicle A may collect the vehicle stream information of a first lane where it is located and an adjacent second lane. Assuming that it is determined according to the vehicle stream information that there is only one vehicle B traveling in front of the vehicle A in the first lane, and speeds of the vehicle B in a preset duration of 1-3 seconds are determined according to the vehicle stream information to be 10 km/h, 9 km/h, and 11 km/h, respectively, then the average speed of the vehicle B is 10 km/h, and, if it is determined that speeds of a vehicle C ahead in the adjacent second lane within 1-3 seconds are 15 km/h, 20 km/h, and 25 km/h, respectively, then the average speed of the vehicle C is 20 km/h. Thereby, the traffic conditions of the first lane and the second lane may be determined according to the average speeds, respectively.

Exemplarily, by taking a vehicle A in an autonomous driving mode as an example, the vehicle A may collect the vehicle stream information of a first lane where it is located and an adjacent second lane. Assuming that it is determined according to the vehicle stream information that there are vehicles B and D traveling in front of the vehicle A in the first lane, and speeds of the vehicle B in a preset duration of 1-3 seconds are determined according to the vehicle stream information to be 10 km/h, 9 km/h, and 11 km/h, respectively, then the average speed of the vehicle B is 10 km/h, and, speeds of the vehicle D within the preset duration of 1-3 seconds is 12 km/h, 14 km/h, and 16 km/h, respectively, then the average speed of the vehicle D is 14 km/h. Assuming that weight coefficients for the vehicle B and the vehicle D are 0.6 and 0.4, respectively, then the first vehicle stream speed is (10*0.6+14*0.4) =11.6km/s. Similarly, if there are vehicles C and E in front of the adjacent second lane, after calculating the average speeds of the vehicles C and E within the preset duration, respectively, the second vehicle stream speed of the second lane is obtained according to the corresponding weighted summation. In this way, it is possible to subsequently determine the traffic conditions of the first lane and the second lane, respectively.

In some implementations, the traffic condition of the lane may be determined according to a magnitude of the first vehicle stream speed. For example, the step (102.1) may comprise:
(102.1.1) comparing the first vehicle stream speed with a preset vehicle speed threshold;
(102.1.2) determining that the traffic condition of the first lane is the congested state if the first vehicle stream speed is less than the preset vehicle speed threshold; and
(102.1.3) determining that the traffic condition of the first lane is the smooth state if the first vehicle stream speed is greater than or equal to the preset vehicle speed threshold.

Herein, the preset vehicle speed threshold may be a critical value for determining whether there is congestion in front of the traveling lane, which may be set empirically or according to the minimum speed limit of a corresponding lane. For example, the minimum speed limit of a freeway is 60 km/s, the minimum speed limit of a ring road is 30 km/s, the minimum speed limit of an urban arterial road is 10 km/s, and so on, and thus the preset vehicle speed threshold of the corresponding lane may be set according to the above speed limits.

Specifically, the vehicle-mounted terminal, after identifying the first vehicle stream speed, begins to judge whether the vehicle meets a speed condition required for lane change based on the first vehicle stream speed, i.e. whether it is smaller than the preset vehicle speed threshold. If the first vehicle stream speed is smaller than the predetermined preset vehicle speed threshold, it means that a vehicle passing speed in front of the lane in which the vehicle is traveling is slower, and it is likely that there is a congested situation, and if the first vehicle stream speed is greater than or equal to the preset vehicle speed threshold, then it means that the vehicle passing speed of the lane in which the vehicle is traveling is faster, and the lane is relatively smooth and there is no the congested situation. For example, if the preset vehicle speed threshold is 8 km/h and the first vehicle stream speed is 7 km/h, then it can be known that the vehicle passing speed in front of the lane in which the vehicle is traveling is slower, and in turn it can be prejudged that there is a congested situation in front of the current lane. Similarly, if the preset vehicle speed threshold is 15 km/h and the first vehicle stream speed is 16 km/h, then it can be known that the vehicle passing speed of the lane in which the vehicle is traveling is faster, and the lane is relatively smooth, and there is no the congested situation.

In some implementations, the method of identifying the traffic conditions may be combined with the average speed of vehicle stream in the second lane. For example, the step (102.2) "determining the traffic condition of the second lane according to the first vehicle stream speed and the second vehicle stream speed", may comprise:
(102.2.1) determining a speed difference between the second vehicle stream speed and the first vehicle stream speed, and determining a speed ratio between the second vehicle stream speed and the first vehicle stream speed;
(102.2.2) determining that the traffic condition of the second lane is the smooth state if the speed difference is greater than a preset speed difference threshold and the speed ratio is greater than a preset speed ratio threshold; and
(102.2.3) determining that the traffic condition of the second lane is the congested state if the speed difference is less than the preset speed difference threshold or the speed ratio is less than the preset speed ratio threshold.

Herein, the preset speed difference threshold may be a vehicle stream speed difference threshold of different lanes for qualifying whether the vehicle subsequently makes a lane change, which may be understood as one of lane change judgement thresholds. Specifically, the preset speed difference threshold indicates the minimum speed difference that needs to be achieved between the first vehicle stream speed and the second vehicle stream speed when the target vehicle needs to make a lane change, and the preset speed difference threshold may specifically be set according to the actual situation.

Herein, the preset speed ratio threshold may be a ratio of vehicle stream speeds of two lanes for qualifying whether the vehicle subsequently makes a lane change, which may be understood as one of lane change judgement thresholds. Specifically, the preset speed ratio threshold indicates the minimum speed ratio that needs to be achieved in the ratio between the second vehicle stream speed and the first vehicle stream speed when the target vehicle needs to make a lane change.

Specifically, the vehicle-mounted terminal, after identifying the first vehicle stream speed and the second vehicle stream speed, acquires a speed difference and a speed ratio between them based on both the first vehicle stream speed and the second vehicle stream speed, and then, begins to determine whether the vehicle meets a speed condition required for lane change, i.e., whether the speed difference is greater than the preset speed difference threshold and whether the speed ratio is greater than the preset speed ratio threshold. If the speed difference is less than the preset speed difference threshold or the speed ratio is less than the preset speed ratio threshold, then it means that the vehicle passing speed in front of the lane is slower, and it is likely that there is a congested situation. If the speed difference is greater than the preset speed difference threshold and the speed ratio is greater than the preset speed ratio threshold, then it means that the vehicle passing speed of the lane is faster, and the lane is relatively smooth, and there is no the congested situation.

Exemplarily, the target vehicle is traveling in the first lane. Assuming that the first vehicle stream speed of vehicles ahead of the first lane is 1 m/s, and the second vehicle stream speed of the adjacent second lane is 6 m/s, then the speed difference between the second vehicle stream speed and the first vehicle stream speed is 5 m/s, and the speed ratio between the second vehicle stream speed and the first vehicle stream speed is 6. If the preset speed difference threshold is 4 m/s and the preset speed ratio threshold is 1.5, then it means that there is an obvious difference in terms of vehicle stream speeds between the first lane and the second lane, i.e., the vehicle stream speed of the second lane is faster than that of the first lane, and the traffic condition of the second lane is obviously better than that of the first lane, and generally is in a smooth state. It is to be noted that it is meaningful only if it is judged that the traffic condition of the second lane must simultaneously satisfy two conditions that the speed difference is greater than the preset speed difference threshold and the speed ratio is greater than the preset speed ratio threshold, and if only the condition that the speed difference is greater than the preset speed difference threshold is satisfied, assuming that the first vehicle stream speed is 1 m/s, the second vehicle stream speed of the adjacent second lane is 1.6 m/s, and the preset speed ratio threshold is 1.5, although the vehicle satisfies the condition that the speed ratio is greater than the preset speed ratio threshold, but the vehicle stream speeds of the first lane and the second lane are actually not fast, changing from the first lane to the second lane is meaningless, so when judging the traffic condition of the second lane, the two conditions that the speed difference is greater than the preset speed difference threshold and the speed ratio is greater than the preset speed ratio threshold must be satisfied at the same time.

In the above manner, the traffic conditions of the first lane and the second lane can be determined by the vehicle stream information to judge whether the first lane is congested and whether the second lane is smooth, in order for the vehicle-mounted terminal to prejudge whether the current lane is congested and whether the lane after the lane change can satisfy the purpose of smooth passing.

103. Identify a vehicle ahead and a vehicle behind that are close to the target vehicle in the second lane according to the vehicle stream information, when the traffic conditions are that the first lane is in a congested state and the second lane is in a smooth state.

Herein, vehicles ahead that are close may be any means of transportation ahead of the target vehicle in the second lane, such as a car, a two-wheeled vehicle, a three-wheeled vehicle, an electric vehicle, and the like.

Herein, vehicles behind that are close may be any means of transportation behind the target vehicle in the second lane, such as a car, a two-wheeled vehicle, a three-wheeled vehicle, an electric vehicle, and the like.

Specifically, the vehicle-mounted terminal utilizes the collected vehicle stream information to acquire the average speed of vehicles ahead in the first lane and the second lane, and then it can utilize the average speed of the vehicles in the first lane and the second lane to determine whether the first lane and the second lane are in a congested state, and if speeds of the vehicles in the first lane are lower than a traveling speed of a normal vehicle, it can be prejudged that there is a congested situation in front of the first lane, and if speeds of the vehicles in the second lane are higher, it can be judged that with respect to the first lane, the second lane is relatively smooth and in a non-congested state, at which time the target vehicle is to satisfy a speed condition required for lane change, where the speed condition indicates that the second lane satisfies the speed condition for lane change to avoid congestion. After satisfying the speed condition for the vehicle to make a lane change, a safety condition required for lane change, i.e., a safety distance required for lane change, is also taken into account, so based on the vehicle stream information collected from the second lane, the vehicles ahead of and behind the target vehicle in the second lane are acquired.

For example, a vehicle A is traveling in lane #1, the lane #1 is in a congested state in front, and lane #2 next to the lane #1 is not in a congested situation. In order to avoid the congested lane, at this time, the vehicle A needs to change from the lane #1 to the lane #2, but there are also vehicles traveling in the lane #2, and changing the lane hastily may result in a collision of vehicles, resulting in a traffic accident. In order to avoid the traffic accident, the vehicle A needs to acquire vehicles B and C ahead in the lane #2 to determine the positions of the vehicles B and C.

In some implementations, image information in the lane of the target vehicle may be combined to determine vehicles ahead and behind that are close in the adjacent lane(s). For example, the step (103) "Identify a vehicle ahead and a vehicle behind that are close to the target vehicle in the second lane according to the vehicle stream information", may comprise:
(103.1) acquiring a set of images corresponding to the current vehicle stream information;
(103.2) selecting a first image containing information on the vehicle ahead of the target vehicle, and selecting a second image containing information on the vehicle behind of the target vehicle, from the set of images;
(103.3) identifying the vehicle ahead that is close to the target vehicle in the second lane from the first image; and
(103.4) identifying the vehicle behind that is close to the target vehicle in the second lane from the second image.

Herein, the set of images may include one or more lane images around the target vehicle, for example, including a lane image of the front, a lane image of the rear, a lane image of the left, a lane image of the right, and the like.

Herein, the first image may be an image of the lane in front of the target vehicle, and when there is a vehicle on the lane, the first image may contain vehicle characteristic information, which is not limited to characteristics including a color of the vehicle, a type of the vehicle, and the like.

Herein, the second image may be an image of the lane behind the target vehicle, and when there is a vehicle on the lane, the second image includes, but is not limited to, a color of the vehicle, a type of the vehicle, and the like.

Specifically, the vehicle-mounted system utilizes camera components located at front and rear sections of the vehicle to acquire images in front of and behind the target vehicle, respectively, and then utilizes an image recognition technique to select, from the acquired set of images, an image containing the vehicle information, wherein an image acquired by the camera component located at a front end of the target vehicle is treated as the first image, and an image acquired by the camera component located at a rear end of the target vehicle is treated as the second image, and then, a vehicle ahead that is close to the target vehicle in the second lane is identified from the first image, and a vehicle behind that is close to the target vehicle in the second lane is identified from the second image.

In the above manner, after determining that the traffic conditions are that the first lane is in a congested state and the second lane is in a non-congested state, the vehicles ahead and behind that are close to the target vehicle in the second lane may be identified according to the vehicle stream information, so as to acquire information on the vehicles in the second lane, to subsequently determine whether there is currently a sufficient space for lane change in the second lane, and to enhance the safety of subsequently making a lane change for the vehicle.

104. Acquire a first longitudinal distance between the vehicle ahead and the target vehicle and acquire a second longitudinal distance between the vehicle behind and the target vehicle.

In the embodiments of the present application, in order to enhance the safety of subsequently making a lane change for the vehicle, whether the second lane has a sufficient space for lane change may be determined according to a vehicle spacing between the vehicles ahead and behind in the second lane.

Herein, the first longitudinal distance may be a longitudinal distance between the target vehicle and a first vehicle ahead that is close in the second lane in a longitudinal direction, which may be understood as a distance in the traveling direction. Similarly, the second longitudinal distance may be a longitudinal distance between the target vehicle and a first vehicle behind that is close in the second lane in the longitudinal direction, which may be understood as a distance in the traveling direction.

Specifically, when the target vehicle is traveling, the vehicle-mounted terminal maintains the distance monitoring of a first vehicle traveling ahead of the adjacent lane(s) of the traveling lane where it is located and identifies the longitudinal distance between the target vehicle and it, and at the same time maintains the distance monitoring of a first vehicle traveling behind in the adjacent lane(s) of the traveling lane and also identifies the longitudinal distance between the target vehicle and it. For example, when the target vehicle A is driving autonomously, the vehicle-mounted terminal monitors, via sensors, the longitudinal distance of a vehicle B traveling ahead in the adjacent lane(s) from the target vehicle A within 3 seconds, and the longitudinal distance of a vehicle C traveling behind in the adjacent lane(s) from the target vehicle A within 3 seconds.

In some implementations, the method of acquiring the longitudinal distances of the vehicles ahead and behind in the lane may be obtained in combination with a positional relationship and positional distribution between the vehicles. For example, the step (104) "Acquire a first longitudinal distance between the vehicle ahead and the target vehicle", may comprise:
(104.1) identifying a target distance between the vehicle ahead and the target vehicle within a preset duration;
(104.2) determining a positional distribution relationship between the vehicle ahead and the target vehicle; and
(104.3) determining the first longitudinal distance between the vehicle ahead and the target vehicle according to the target distance and the positional distribution relationship.

Herein, the target distance may be a straight-line distance between the vehicle ahead and the target vehicle. For example, the target vehicle A is traveling in the first lane, and the vehicle C is the closest vehicle traveling ahead in the adjacent second lane, and the distance of a straight line between the target vehicle A and the vehicle C is indicated by the target distance, where the straight line is in a state of intersecting with the traveling direction of the target vehicle A, e.g., at a 30-degree angle. That is, with respect to the traveling direction of the target vehicle, the target distance may be the shortest distance in an oblique direction.

Herein, the positional distribution relationship may be a geometric positional relationship between the target vehicle and the vehicle ahead. Specifically, the positional distribution relationship may be a positional angle in the traveling direction of the target vehicle. For example, by taking a coordinate system as an example, the vehicle-mounted terminal of the target vehicle may take the center of the target vehicle as a coordinate origin, sense position information of nearby vehicles in real time through a sensing component (e.g., a lidar, a camera component, an infrared component, etc.), and convert it into coordinates to represent geometric positions of the vehicle ahead in the coordinate system, so as to be used for participating in an arbitrary distance calculation subsequently.

Specifically, when the target vehicle is traveling, the vehicle-mounted terminal utilizes a distance sensor to maintain in real time the distance monitoring of the first vehicle traveling ahead of the adjacent lane(s) of the traveling lane where it is located and identifies a straight-line distance between the target vehicle and it, i.e., the target distance between them, and at the same time, with the vehicle body of the target vehicle as the coordinate origin, acquires, within the range of the distance sensor, coordinate information of the vehicle ahead relative to the target vehicle, i.e., the positional distribution relationship between them, and finally, acquires a longitudinal distance between the two vehicles, that is, the first longitudinal distance, in combination with the target distance and the positional distribution relationship.

Exemplarily, if the target distance between the target vehicle and the vehicle ahead is 30 meters, and the positional distribution relationship is that the vehicle ahead deviates from the traveling direction of the target vehicle by 30 degrees, then according to the cosine function algorithm, the first longitudinal distance = 30*cos30°, which is approximately equal to 26 meters.

It is to be noted that the second longitudinal distance between the vehicle behind and the target vehicle can be referred to the calculation of the "first longitudinal distance", which will not be repeated here.

In the above manner, the first longitudinal distance between the vehicle ahead and the target vehicle can be acquired, and the second longitudinal distance between the vehicle behind and the target vehicle can be determined, and in turn, the first longitudinal distance and the second longitudinal distance can be compared with the preset vehicle distance threshold resepectively, so as to determine whether there is a sufficient lane space in the adjacent lane(s) according to the comparison result, and to provide reference data for subsequent judgment of the safety distance.

105. Control the target vehicle to switch to the second lane for traveling, when both the first longitudinal distance and the second longitudinal distance are greater than a preset vehicle distance threshold.

Herein, the preset vehicle distance threshold may be the minimum longitudinal distance that needs to be satisfied with the vehicles in the current lane and the target lane when a lane-changing vehicle changes the lane, i.e., a collision-free lane changing can be realized when the lane-changing vehicle satisfies the minimum safety distance.

Specifically, the vehicle-mounted terminal, after identifying the first longitudinal distance and the second longitudinal distance, judges whether the first longitudinal distance and the second longitudinal distance satisfy the minimum longitudinal distance required by a vehicle when changing the lane. If both the first longitudinal distance and the second longitudinal distance are greater than the minimum longitudinal distance required when changing the lane, indicating that the current lane-changing distance is safe, then it can control the vehicle to change from the first lane to the second lane for traveling. For example, before changing the lane, the longitudinal distances between the target vehicle in the first lane and the vehicles ahead and behind in the second lane are only 25 meters, but the minimum safe longitudinal distance required for changing the lane is 20 meters, then it means that it is safe for the target vehicle to change the lane to the second lane, the safe distance required for changing the lane for the target vehicle is satisfied, and it is possible to control the target vehicle to switch to the second lane for traveling.

In some implementations, the method of controlling the target vehicle to switch the lane may also make a judgement in combination with the travel planning path of the vehicle. For example, before the "controlling the target vehicle to switch to the second lane for traveling" in step (105), it may also comprise:
(105.a.1) acquiring a current travel planning path of the target vehicle, and building a pre-planned path of the target vehicle on the second lane according to the travel planning path; and
(105.a.2) determining a path distance corresponding to the pre-planned path.

Then, the "controlling the target vehicle to switch to the second lane for traveling" in step (105) may comprise: if the path distance is greater than or equal to a preset distance threshold, controlling the target vehicle to switch to the second lane for traveling.

Herein, the pre-planned path may be the planning of a traveling route of the vehicle acquired by the vehicle-mounted terminal from a navigation system, for example, a navigation planned path of the vehicle A going from a point #1 to a point #2.

Herein, the path distance may be the length of the longest distance to keep going straight and not need to change the lane when traveling on a certain lane. For example, if a lane change to the right into a right-turn-only lane is required at an intersection, the remaining navigation distance for the currently traveling lane will be shorter.

Herein, the preset vehicle distance threshold may be a threshold for a distance that the target vehicle is at least required to keep going straight and does not need to change the lane after the vehicle changes the lane.

Specifically, when the target vehicle is traveling, after completely detecting, by the vehicle-mounted terminal, a speed condition and a distance condition required for a vehicle to make a lane change, if the vehicle satisfies the speed condition and the distance condition, the vehicle-mounted terminal acquires the current travel planning path of the target vehicle from a navigation system of the vehicle and determines the remaining distances of the current lane and the lane to which to be soon changed based on the travel planning path. If the remaining straight-line distance of the lane to be soon changed to is less than a certain distance threshold, for example, the target vehicle is about to change the lane to the right at an intersection, but the lane on the right is a right-turn-only lane, and the travel planning path of the target vehicle is a straight line, then the remaining navigational distance of the right lane to which to be soon changed to the right is shorter, and it is meaningless to re-change the lane, so the vehicle will make a lane change only if the remaining navigational distance of the lane to which to be soon changed is greater than or equal to the certain distance threshold.

In some implementations, the method of controlling the target vehicle to switch the lane may also make a judgement in combination with priorities of the lanes. For example, before the "controlling the target vehicle to switch to the second lane for traveling" in step (105), it may also comprise:
(105.b.1) acquiring a current travel planning path of the target vehicle, and determining a traveling control strategy for the target vehicle within a preset path distance according to the travel planning path; and
(105.b.2) determining a first priority of the first lane and a second priority of the second lane according to the traveling control strategy.

Then, the "controlling the target vehicle to switch to the second lane for traveling" in step (105) may comprise: if the second priority is greater than or equal to the first priority, controlling the target vehicle to switch to the second lane for traveling.

Herein, the traveling control strategy may be a direction in which the target vehicle is about to travel as determined by the target vehicle based on navigation information. For example, if the navigation information indicates that the vehicle will turn to the right, the traveling control strategy of the vehicle controls the vehicle to travel to the right.

Herein, the first priority may be a priority of the vehicle's current traveling lane, which may be expressed as a positive integer, for example: 1, 2, 3.

Herein, the second priority may be a priority with which the vehicle is about to change the lane, which may be expressed as a positive integer, for example: 1, 2, 3.

Specifically, the vehicle-mounted terminal, after completely detecting a speed condition and a distance condition required for a vehicle to make a lane change, if the vehicle satisfies the speed condition and distance conditions, then the navigation system is utilized to acquire the current travel planning path of the target vehicle, thereby determining a traveling road of the target lane, and a specific lane to which the target vehicle is about to change in the current traveling road is determined based on the traveling road, and then the priority of the lane is determined according to the path strategy under which the target vehicle is about to travel. For example, if the navigation information indicates that the traveling path of the target vehicle is to go straight toward an intersection ahead, then the priority of the middle lane is the highest, and the traveling control strategy of the target vehicle is to go straight ahead. Then, the priority of the current traveling lane of the vehicle and the priority of the lane to which the vehicle is about to change are determined based on the traveling control strategy. It is worth noting that a lane priority can be expressed as a priority value, and the higher the priority value of the lane is, the lower the corresponding priority is, i.e., the priority and the priority value are inversely proportional to one another, and then a comparison is made of priority values of different lanes to determine whether a priority is high or low.

Exemplarily, a priority value about a lane may be described as: target_priority ≤ (ego_priority +1). Here, target_priority is the priority value of the vehicle's current traveling lane, ego_priority is the priority value of the lane to which the vehicle is about to change, and +1 indicates that the lane has an inverse priority capability, and the vehicle can make a lane change if the equation is satisfied. For example, the priority value of the current traveling lane is 1 and the priority value of the lane to which to be soon changed to is 2, which means that the priority of the current traveling lane is higher than that of the lane to which to be soon changed to, but in order to avoid congestion, the equation gives the lane to which to be soon changed to the inverse priority capability, making the priority of the lane to which to be soon changed to equal to that of the current traveling lane. However, if the lane to which to be soon changed to is a right-turn-only lane and the vehicle's traveling strategy is to travel forward, the priority value of this right-turn-only lane will be increased significantly accordingly, making the lane not have the inverse priority capability.

In the above manner, it is possible to determine whether or not the adjacent lane satisfies the lane-changing condition, and when the adjacent lane satisfies the lane-changing condition, the target vehicle is controlled to make a lane change without collision, which enhances the safety of the vehicle to make the lane change.

By implementing any one of the embodiments of the present application or a combination thereof, application scenarios of the vehicle control process can be realized.

As can be seen from above, the embodiments of the present application may collect vehicle stream information within a preset distance range of a target vehicle, the vehicle stream information comprising at least the vehicle stream information of a first lane where the target vehicle is located and an adjacent second lane; determine traffic conditions of the first lane and the second lane according to the vehicle stream information; identify a vehicle ahead and a vehicle behind that are close to the target vehicle in the second lane according to the vehicle stream information, when the traffic conditions are that the first lane is in a congested state and the second lane is in a smooth state; acquire a first longitudinal distance between the vehicle ahead and the target vehicle and acquire a second longitudinal distance between the vehicle behind and the target vehicle; and control the target vehicle to switch to the second lane for traveling, when both the first longitudinal distance and the second longitudinal distance are greater than a preset vehicle distance threshold. It can be concluded that the present solution may collect the vehicle stream information of vehicles ahead of the vehicle's current lane and ahead of the adjacent lane(s), and acquire an average speed of the vehicles ahead therefrom. If speeds of the vehicles ahead of the vehicle are lower than a certain value, while speeds of passing the vehicles ahead in the adjacent lane(s) are fast, it means that the adjacent lane(s) is(are) more smooth than the current traveling lane, and after acquiring the longitudinal distances between the vehicle and the vehicles ahead and behind in the adjacent lanes, it is determined that the longitudinal distances between the vehicles ahead and behind in the adjacent lane(s) are all at a safe distance value, and the target vehicle can be controlled to switch to a smoother lane for traveling. In this way, congestion can be prejudged in advance and a safe lane change can be made to improve the vehicle's passage efficiency.

According to the method described in the above embodiments, the following examples will be given for further detailed description.

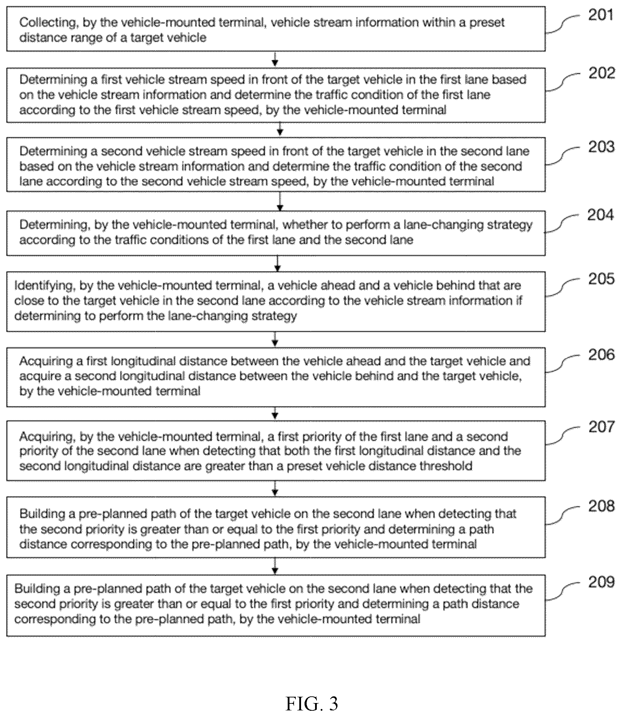

The embodiments of the present application take a vehicle control apparatus as an example to further describe the vehicle control method according to the embodiment of the present application. FIG. 3 is another schematic flow chart of steps of a vehicle control method according to an embodiment of the present application. For convenience of understanding, the embodiment of the present application is described in connection with FIG. 3.

In the embodiment of the present application, the description will be made from the perspective of the vehicle control apparatus, which may specifically be integrated in a computer device such as a vehicle-mounted terminal. When a processor on the vehicle-mounted terminal executes program instructions corresponding to a data transmission method, a specific flow of the vehicle control method is as follows:
201. Collect, by the vehicle-mounted terminal, vehicle stream information within a preset distance range of a target vehicle.

Herein, the target vehicle may be a means of transportation with carrying capability, such as a car, a two-wheeled vehicle, a three-wheeled vehicle, an electric vehicle, etc., and the target vehicle is mounted with a vehicle-mounted terminal, and the vehicle-mounted terminal may control the corresponding software or hardware to acquire lane information and make the lane change.

Herein, the vehicle stream information may be used to represent a vehicle stream speed (passing speed) in the corresponding lane, which may reflect the overall smooth or congested condition of each lane, and it can be understood that the vehicle stream information generally represents the vehicle speeds of one or more vehicles in the corresponding lane. Specifically, the vehicle stream information may contain information on a volume of vehicles traveling in the lane in which the target vehicle is traveling as well as in its adjacent/surrounding lane(s), and the vehicle stream information is not limited to including information on vehicles in the lanes, the number of vehicles, the traveling direction of vehicles, the vehicle speeds, and the like.

Specifically, when the target vehicle is traveling, the vehicle-mounted terminal may take the target vehicle as the center and collect the vehicle stream information in lanes within a preset distance range in real time, such as through an information collection component (a lidar, a camera component, etc.). For another example, the vehicle stream information is determined through vehicle passage data in each lane in an electronic navigation map. By taking the information collection component as an example, in general, the information collection component mainly collects the vehicle stream information in the lane in which the target vehicle is traveling as well as the vehicle stream information of nearby lane(s). For example, a vehicle A utilizes a sensor located at the front end of the vehicle body to keep detecting a speed and traveling direction of a vehicle within 20 meters ahead of the lane in which the vehicle is traveling in 5 seconds and determine them as the vehicle stream information of the first lane, and at the same time, utilizes the sensor located at the front end of the vehicle body to keep detecting a speed and traveling direction of a vehicle within 20 meters behind the lane in which the vehicle is traveling in 5 seconds and determine them as the vehicle stream information of the second lane.

202. Determine a first vehicle stream speed in front of the target vehicle in the first lane based on the vehicle stream information and determine the traffic condition of the first lane according to the first vehicle stream speed, by the vehicle-mounted terminal.

Herein, the traffic conditions may refer to a traffic operation condition of certain lane or certain region, and may indicate an occupied state of the corresponding lane, which may include at least two conditions of "congested" and "non-congested (smooth)".

Herein, the first vehicle stream speed may be an average speed of vehicles ahead of the first lane within a preset duration, and the first vehicle stream speed may be determined according to speeds of one or more vehicles ahead of the target vehicle in the first lane.

Specifically, when the target vehicle is traveling, first, the vehicle-mounted terminal utilizes a detection component in the vehicle to collect the vehicle stream information of vehicles traveling in front of the lane in which the target vehicle is traveling, and based on the vehicle stream information, determines the speeds of the vehicles ahead within the preset duration, and in turn, performs a weighted averaging on the speeds of the vehicles traveling in front, thereby identifying the average speed of the vehicles ahead. Finally, the traffic condition in the lane is determined according to the average speed. Specifically, the preset vehicle speed threshold may be set in advance according to the minimum speed limit of the first lane. For example, the minimum speed limit of a low-speed lane of a freeway is 60 km/s, and for another example, the minimum speed limit of a ring road lane in a city is 30 km/s, and thus the preset vehicle speed threshold corresponding to the first lane may be set according to the above minimum speed limits. It can be understood that a vehicle may have different speed limits of the vehicle in different scenarios, and the preset vehicle speed threshold for the first lane may be selected based on a target position according to a target position of the target vehicle. In turn, the first vehicle stream speed is compared with the preset vehicle speed threshold, in order to determine the traffic condition of the lane. In addition, in the process of performing the comparison of the first vehicle stream speed, a factor of a duration for comparison may also be added, such that if the first vehicle stream speed is lower than a normal speed (less than the preset vehicle speed threshold) for 5 seconds, it can be determined that the current traffic condition of the first lane is in a congested road condition.

Exemplarily, by taking a vehicle A in an autonomous driving mode as an example, the vehicle A may collect vehicle stream information of a first lane where it is located. Assuming that it is determined according to the vehicle stream information that there is only one vehicle B traveling in front of the vehicle A in the first lane, and speeds of the vehicle B in a preset duration of 1-3 seconds are determined according to the vehicle stream information to be 10 km/h, 9 km/h, and 11 km/h, respectively, then the average speed of the vehicle B is 10 km/h, and if the preset first vehicle stream speed is 15 km/h, then it can be determined that the current traffic condition of the first lane is in a congested road condition.

Exemplarily, by taking a vehicle A in an autonomous driving mode as an example, the vehicle A may collect vehicle stream information of a first lane where it is located. Assuming that it is determined according to the vehicle stream information that there are vehicles B and D traveling in front of the vehicle A in the first lane, and speeds of the vehicle B in a preset duration of 1-3 seconds are determined according to the vehicle stream information to be 10 km/h, 9 km/h, and 11 km/h, respectively, then the average speed of the vehicle B is 10 km/h, and, speeds of the vehicle D within the preset duration of 1-3 seconds are 12 km/h, 14 km/h, and 16 km/h, respectively, then the average speed of the vehicle D is 14 km/h. Assuming that weight coefficients for the vehicle B and the vehicle D are 0.6 and 0.4, respectively, then the first vehicle stream speed is (10*0.6+14*0.4) =11.6km/s. If the preset first vehicle stream speed is 15 km/h, then it can be determined that the current traffic condition of the first lane is in a congested road condition.

203. Determine a second vehicle stream speed in front of the target vehicle in the second lane based on the vehicle stream information and determine the traffic condition of the second lane according to the second vehicle stream speed, by the vehicle-mounted terminal.

Herein, the second vehicle stream speed may be an average speed of vehicles ahead of adjacent/surrounding lane(s) of the lane in which the target vehicle is currently traveling, which is determined in the same manner as that of the first vehicle stream speed, and the details are not repeated.

Specifically, the vehicle-mounted terminal, after identifying the first vehicle stream speed and the second vehicle stream speed, acquires a speed difference and a speed ratio between them based on the first vehicle stream speed and the second vehicle stream speed, and then, begins to determine whether the vehicle meets a speed condition required for lane change, i.e., whether the speed difference is greater than the preset speed difference threshold and whether the speed ratio is greater than the preset speed ratio threshold. If the speed difference is less than the preset speed difference threshold or the speed ratio is less than the preset speed ratio threshold, then it means that the vehicle passing speed in front of the second lane is slower, and it is likely that there is a congested situation. If the speed difference is greater than the preset speed difference threshold and the speed ratio is greater than the preset speed ratio threshold, then it means that the vehicle passing speed of the second lane is faster, and the second lane is relatively smooth, and there is no the congested situation.

Exemplarily, the target vehicle is traveling in the first lane. Assuming that the first vehicle stream speed of vehicles ahead of the first lane is 1 m/s, and the second vehicle stream speed of the adjacent second lane is 6 m/s, then the speed difference between the second vehicle stream speed and the first vehicle stream speed is 5 m/s, and the speed ratio between the second vehicle stream speed and the first vehicle stream speed is 6. If the preset speed difference threshold is 4 m/s and the preset speed ratio threshold is 1.5, then it means that there is an obvious difference in terms of vehicle stream speeds between the first lane and the second lane, i.e., the vehicle stream speed of the second lane is faster than that of the first lane, and the traffic condition of the second lane is obviously better than that of the first lane, and generally is in a smooth state. It is to be noted that it is meaningful only if it is judged that the traffic condition of the second lane must simultaneously satisfy two conditions that the speed difference is greater than the preset speed difference threshold and the speed ratio is greater than the preset speed ratio threshold, and if only the condition that the speed difference is greater than the preset speed difference threshold is satisfied, assuming that the first vehicle stream speed is 1 m/s, the second vehicle stream speed of the adjacent second lane is 1.6 m/s, and the preset speed ratio threshold is 1.5, although the vehicle satisfies the condition that the speed ratio is greater than the preset speed ratio threshold, but the vehicle stream speeds of the first lane and the second lane are actually not fast, changing from the first lane to the second lane is meaningless, so when judging the traffic condition of the second lane, the two conditions that the speed difference is greater than the preset speed difference threshold and the speed ratio is greater than the preset speed ratio threshold must be satisfied at the same time.

204. Determine, by the vehicle-mounted terminal, whether to perform a lane-changing strategy according to the traffic conditions of the first lane and the second lane.

Herein, the lane-changing strategy may be that the vehicle-mounted terminal, after determining that the first lane currently traveling in it is in a congested road condition and the adjacent second lane is in a smooth road condition, will execute an operating scheme of controlling the target vehicle to change from the first lane to the second lane, i.e., a traveling scheme for the vehicle-mounted terminal to control the target vehicle.

Specifically, the vehicle-mounted terminal utilizes the collected vehicle stream information to acquire the average speed of vehicles ahead in the first lane and the second lane, and then it can utilize the average speed of the vehicles in the first lane and the second lane to determine whether the first lane and the second lane are in a congested state, and if speeds of the vehicles in the first lane are lower than a traveling speed of a normal vehicle, it can be prejudged that there is a congested situation in front of the first lane, and if speeds of the vehicles in the second lane are higher, it can be judged that with respect to the first lane, the second lane is relatively smooth and in a non-congested state, at which time the target vehicle is to satisfy a speed condition required for making the lane change, where the speed condition indicates that the second lane satisfies the speed condition for lane change to avoid congestion. In order to avoid congestion, the vehicle-mounted terminal will control the target vehicle to change from the first lane to the second lane.

205. Identify, by the vehicle-mounted terminal, a vehicle ahead and a vehicle behind that are close to the target vehicle in the second lane according to the vehicle stream information if determining to perform the lane-changing strategy.

Specifically, after satisfying the speed condition for the vehicle to make a lane change, a safety condition required for lane change, i.e., a safety distance required for lane change, is also taken into account, so based on the vehicle stream information collected from the second lane, the vehicles ahead of and behind the target vehicle in the second lane are acquired.

Specifically, the vehicle-mounted system utilizes camera components located at front and rear sections of the vehicle to acquire images in front of and behind the target vehicle, respectively, and then utilizes an image recognition technique to select, from the acquired set of images, an image containing the vehicle information, wherein an image acquired by the camera component located at a front end of the target vehicle is treated as the first image, and an image acquired by the camera component located at a rear end of the target vehicle is treated as the second image, and then, a vehicle ahead that is close to the target vehicle in the second lane is identified from the first image, and a vehicle behind that is close to the target vehicle in the second lane is identified from the second image.

206. Acquire a first longitudinal distance between the vehicle ahead and the target vehicle and acquire a second longitudinal distance between the vehicle behind and the target vehicle, by the vehicle-mounted terminal.

Herein, the first longitudinal distance may be a longitudinal distance between the target vehicle and a first vehicle ahead that is close in the second lane in a longitudinal direction, which may be understood as a distance in the traveling direction. Similarly, the second longitudinal distance may be a longitudinal distance between the target vehicle and a first vehicle behind that is close in the second lane in the longitudinal direction, which may be understood as a distance in the traveling direction.

Specifically, when the target vehicle is traveling, the vehicle-mounted terminal maintains the distance monitoring of a first vehicle traveling ahead of the adjacent lane(s) of the traveling lane where it is located and identifies the longitudinal distance between the target vehicle and it, and at the same time maintains the distance monitoring of a first vehicle traveling behind in the adjacent lane(s) of the traveling lane and also identifies the longitudinal distance between the target vehicle and it.

Specifically, the vehicle-mounted terminal utilizes a distance sensor to maintain in real time the distance monitoring of the first vehicle traveling ahead of the adjacent lane(s) of the traveling lane where it is located and identifies a straight-line distance between the target vehicle and it, i.e., the target distance between them, and at the same time, with the vehicle body of the target vehicle as the coordinate origin, acquires, within the range of the distance sensor, coordinate information of the vehicle ahead relative to the target vehicle, i.e., the positional distribution relationship between them, and finally, acquires a longitudinal distance between the two vehicles, that is, the first longitudinal distance, in combination with the target distance and the positional distribution relationship. Similarly, the second longitudinal distance may also be obtained by this method.

Exemplarily, if the target distance between the target vehicle and the vehicle ahead is 30 meters, and the positional distribution relationship is that the vehicle ahead deviates from the traveling direction of the target vehicle by 30 degrees, then according to the cosine function algorithm, the first longitudinal distance = 30*cos30°, which is approximately equal to 26 meters.

It is to be noted that the second longitudinal distance between the vehicle behind and the target vehicle can be referred to the calculation of the "first longitudinal distance", which will not be repeated here.

207. Acquire, by the vehicle-mounted terminal, a first priority of the first lane and a second priority of the second lane when detecting that both the first longitudinal distance and the second longitudinal distance are greater than a preset vehicle distance threshold.

Herein, the preset vehicle distance threshold may be the minimum longitudinal distance that needs to be satisfied with the vehicles in the current lane and the target lane when a lane-changing vehicle changes the lane, i.e., a collision-free lane changing can be realized when the lane-changing vehicle satisfies the minimum safety distance.

Specifically, the process of acquiring the first priority of the first lane and the second priority of the second lane is as follows: the navigation system is utilized to acquire the current travel planning path of the target vehicle, and the traveling control strategy (e.g., right turn, left turn, U-turn, go straight, etc.) to be performed by the target vehicle in a future period of time (e.g., 30 seconds, 1 minute, etc.) is determined according to the travel planning path. Further, the priorities of the lanes are determined based on that the target vehicle is about to perform a path strategy. For example, if the navigation information indicates that the traveling path of the target vehicle is to go straight toward a intersection ahead, then the priority of the middle lane is the highest, and the traveling control strategy of the target vehicle is to go straight ahead. Further, the first priority of the first lane in which the vehicle is currently traveling and the second priority of the second lane to which the vehicle is about to change can be determined, and it is to be noted that a lane priority can be expressed as a priority value, and the higher the priority value of the lane is, the lower the corresponding priority is, i.e., the priority and the priority value are inversely proportional to one another. Finally, a comparison may be made between the priority values of different lanes so as to determine whether the priorities between the lanes are high or low.

208. Build a pre-planned path of the target vehicle on the second lane when detecting that the second priority is greater than or equal to the first priority and determine a path distance corresponding to the pre-planned path, by the vehicle-mounted terminal.

Herein, the pre-planned path may be the planning of a traveling route of the vehicle acquired by the vehicle-mounted terminal from a navigation system, for example, a navigation planned path of the vehicle A going from a point #1 to a point #2.

Herein, the path distance may be the length of the longest distance to keep going straight and not need to change the lane when traveling on a certain lane. For example, if a lane change to the right into a right-turn-only lane is required at an intersection, the remaining navigation distance for the currently traveling lane will be shorter.

Specifically, when the target vehicle is traveling, the vehicle-mounted terminal, after finishing the detecting a speed condition and a distance condition required for a vehicle to make a lane change, if the vehicle satisfies the speed condition and the distance condition, and it is determined that the second priority corresponding to the second lane is greater than or equal to the first priority corresponding to the first lane, then the vehicle-mounted terminal acquires the current travel planning path of the target vehicle from the vehicle's navigation system and determines the remaining distances of the first lane and the second lane, i.e., the path distances, based on the travel planning path.

209. Control, by the vehicle-mounted terminal, the target vehicle to switch to the second lane for traveling if detecting that the path distance is greater than or equal to a preset distance threshold.

Herein, the preset vehicle distance threshold may be a threshold for a distance that the target vehicle is at least required to keep going straight and does not need to change the lane after the vehicle changes the lane.

Specifically, after the vehicle-mounted terminal has determined the path distance of the second lane, if the path distance of the second lane is less than a certain distance threshold, for example, the target vehicle is about to change the lane to the right at an intersection, but the lane on the right is a right-turn-only lane, and the travel planning path of the target vehicle is a straight line, then the path distance of the right lane to which to be soon changed to the right is shorter, and it is meaningless to re-change the lane, so the vehicle will make a lane change only if the path distance of the second lane is greater than or equal to the certain distance threshold. At this time, the vehicle-mounted terminal will control the target vehicle to change from the first lane to the second lane for traveling.

By performing the steps of 201 to 209, the following example scenarios can be realized.

Exemplarily, by taking a scenario of the target vehicle entering an intersection as an example, there is a roadside temporary parking (such as a taxi) occupying the right lane at the intersection, or there is a bicycle traveling at low speed in front, resulting in a traffic jam. The vehicle-mounted terminal invokes a camera component and a sensing component to collect/acquire surrounding vehicle stream information, which contains at least information about a traffic volume in a lane where the target vehicle is located (the first lane), an adjacent left lane, or an adjacent right lane (the second lane), wherein the vehicle-mounted system utilizes a sensor located at the front end of the vehicle body to keep detecting a speed and traveling direction of a vehicle B within 20 meters ahead of the lane in which the vehicle is traveling in 3 seconds and determine them as the vehicle stream information of the first lane, and at the same time, utilizes the sensor located at the front end of the vehicle body to keep detecting a speed and traveling direction of a vehicle C within 20 meters behind the lane in which the vehicle is traveling in 3 seconds and determine them as the vehicle stream information of the second lane. Reading the first vehicle stream information to obtain the first vehicle stream speed is: the speeds of the vehicle B within the preset duration of 1-3 seconds are 10 km/h, 9 km/h, and 11 km/h, respectively, and the average speed of the vehicle B is calculated as 10 km/h, and the preset vehicle speed threshold of the current lane is 15 km/h, it can be concluded that the traffic condition of the first lane is a congested road condition. Reading the second vehicle stream information to obtain the second vehicle stream speed is: the speeds of the vehicle C within the preset duration of 1-3 seconds are 24 km/h, 25 km/h, 26 km/h, respectively, and the average speed of the vehicle C is calculated as 25 km/h, then a speed ratio of the first vehicle stream speed to the second vehicle stream speed is 1.67, and the speed difference is 10 km/h. If the preset speed ratio threshold is 1.5, and the preset speed difference threshold is 5 km/h, then it can be determined that the second lane is in a smooth road condition relative to the first lane. The longitudinal distances between the vehicle ahead, the vehicle behind, and the target vehicle in the second lane are determined respectively according to the second lane, and a available space for lane change in the second lane is determined according to the longitudinal distances. When the available space for lane change meets the space required for making the lane change, the second lane has sufficient remaining path distance, and the priority of the second lane is greater than or equal to that of the first lane, the target vehicle is controlled to change the lane toward the second lane, in order to travel through the intersection in the second lane.

By means of the above application scenario instances, the following effect can be realized: in the process of driving a vehicle, a traffic congestion scenario in the traveling direction is prejudged, so that the vehicle changes the lane to a non-congested lane in advance to avoid congestion before it enters the traffic congestion scenario. In the process of traveling, in case that one lane is congested and another lane is smooth, it is not needed to worry about driving into one congested lane. By identifying the vehicle stream information of each lane to judge the traffic condition of a corresponding lane, and to ensure that the vehicle can make a lane change in a safe distance, the vehicle's passage efficiency is improved, thus improving the user's driving experience.

It can be concluded that the present solution may collect the vehicle stream information of vehicles ahead of the vehicle's current lane and ahead of the adjacent lane(s), and acquire an average speed of the vehicles ahead therefrom. If speeds of the vehicles ahead of the vehicle are lower than a certain value, while speeds of the vehicles ahead in the adjacent lane(s) are fast, it means that the adjacent lane(s) is(are) more smooth than the current traveling lane, and after acquiring the longitudinal distances between the vehicle and the vehicles ahead and behind in the adjacent lanes, it is determined that the longitudinal distances between the vehicles ahead and behind in the adjacent lane(s) are all at a safe distance, and the target vehicle can be controlled to switch to a smoother lane for traveling. In this way, congestion can be prejudged in advance and a safe lane change can be made to improve the vehicle's passage efficiency.

In order to better implement the above method, an embodiment of the present application also provide a vehicle control apparatus, which can be integrated in a computer device such as a vehicle-mounted terminal.

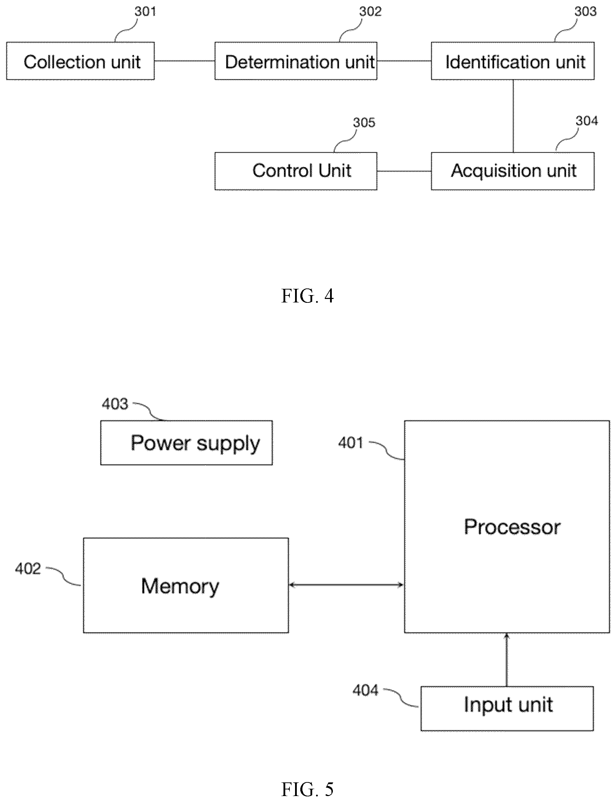

For example, as shown in FIG. 4, the vehicle control apparatus may include a collection unit 301, a determination unit 302, an identification unit 303, an acquisition unit 304, and a control unit 305.

The collection unit 301 is used for collecting vehicle stream information within a preset distance range of a target vehicle, and the vehicle stream information includes at least the vehicle stream information of a first lane where the target vehicle is located and an adjacent second lane.

The determination unit 302 is used for determining traffic conditions of the first lane and the second lane according to the vehicle stream information.

The identification unit 303 is used for identifying a vehicle ahead and a vehicle behind that are close to the target vehicle in the second lane according to the vehicle stream information, when the traffic conditions are that the first lane is in a congested state and the second lane is in a smooth state.

The acquisition unit 304 is used for acquiring a first longitudinal distance between the vehicle ahead and the target vehicle and acquiring a second longitudinal distance between the vehicle behind and the target vehicle.

The control unit 305 is used for controlling the target vehicle to switch to the second lane for traveling, when both the first longitudinal distance and the second longitudinal distance are greater than a preset vehicle distance threshold.

In some embodiment, the determining unit 302 is further used for:
determining a first vehicle stream speed in front of the target vehicle in the first lane based on the vehicle stream information, and determining the traffic condition of the first lane according to the first vehicle stream speed; and
determining a second vehicle stream speed in front of the target vehicle in the second lane based on the vehicle stream information and determining the traffic condition of the second lane according to the first vehicle stream speed and the second vehicle stream speed.

In some embodiment, the determining unit 302 is further used for:
comparing the first vehicle stream speed with a preset vehicle speed threshold;
determining that the traffic condition of the first lane is the congested state if the first vehicle stream speed is less than the preset vehicle speed threshold; and
determining that the traffic condition of the first lane is the smooth state if the first vehicle stream speed is greater than or equal to the preset vehicle speed threshold.

In some embodiment, the determining unit 302 is further used for:
determining a speed difference between the second vehicle stream speed and the first vehicle stream speed, and determining a speed ratio between the second vehicle stream speed and the first vehicle stream speed;
determining that the traffic condition of the second lane is the smooth state if the speed difference is greater than a preset speed difference threshold and the speed ratio is greater than a preset speed ratio threshold; and
determining that the traffic condition of the second lane is the congested state if the speed difference is less than the preset speed difference threshold or the speed ratio is less than the preset speed ratio threshold.

In some embodiment, the identification unit 303 is further used for:
acquiring a set of images corresponding to the current vehicle stream information;
selecting a first image containing information on the vehicle ahead of the target vehicle, and selecting a second image containing information on the vehicle behind of the target vehicle, from the set of images;
identifying the vehicle ahead that is close to the target vehicle in the second lane from the first image; and
identifying the vehicle behind that is close to the target vehicle in the second lane from the second image.

In some embodiment, the acquisition unit 304 is further used for:
identifying a target distance between the vehicle ahead and the target vehicle within a preset duration;
determining a positional distribution relationship between the vehicle ahead and the target vehicle; and
determining the first longitudinal distance between the vehicle ahead and the target vehicle according to the target distance and the positional distribution relationship.

In some embodiment, the vehicle control apparatus further comprises a first judgment unit for:
acquiring a current travel planning path of the target vehicle, and building a pre-planned path of the target vehicle on the second lane according to the travel planning path; and
determining a path distance corresponding to the pre-planned path,
then the controlling the target vehicle to switch to the second lane for traveling, comprises:
   if the path distance is greater than or equal to a preset distance threshold, controlling the target vehicle to switch to the second lane for traveling.

In some embodiment, the vehicle control apparatus 305 further comprises a second judgment unit for:
acquiring a current travel planning path of the target vehicle, and determining a traveling control strategy for the target vehicle within a preset path distance according to the travel planning path; and
determining a first priority of the first lane and a second priority of the second lane according to the traveling control strategy.
then the controlling the target vehicle to switch to the second lane for traveling, comprises:
   if the second priority is greater than or equal to the first priority, controlling the target vehicle to switch to the second lane for traveling.

As can be known from the above, the embodiments of the present application may collect the vehicle stream information of vehicles ahead of the vehicle's current lane and ahead of the adjacent lane(s), and acquire an average speed of the vehicles ahead therefrom. If speeds of the vehicles ahead of the vehicle are lower than a certain value, while speeds of the vehicles ahead in the adjacent lane(s) are fast, it means that the adjacent lane(s) is(are) more smooth than the current traveling lane, and after acquiring the longitudinal distances between the vehicle and the vehicles ahead and behind in the adjacent lanes, it is determined that the longitudinal distances between the vehicles ahead and behind in the adjacent lane(s) are all at a safe distance, and the target vehicle can be controlled to safely switch to a smoother lane for traveling. In this way, congestion can be prejudged in advance and a safe lane change can be made to improve the vehicle's passage efficiency.

The specific implementation of each of the above operations can refer to the preceding embodiments and will not be repeated herein.

An embodiment of the present application also provides a computer device, as shown in FIG. 5, which illustrates a schematic diagram of a structure of the computer device involved in the embodiments of the present application.

Specifically, the computer device may include components such as a processor 401 of one or more processing cores, a memory 402 of one or more computer-readable storage medium, a power supply 403, and an input unit 404. It can be understood by those skilled in the art that the structure of the computer device shown in FIG. 5 does not constitute a limitation of the computer device, and may include more or fewer components than illustrated, or a combination of certain components, or a different arrangement of components. Among other things:
The processor 401 is a control center of the computer device, which utilizes various interfaces and wirings to connect various parts of the entire computer device, and performs various functions of the computer device and processes data by running or executing software programs and/or modules stored in the memory 402, and by calling up data stored in the memory 402, so as to monitor the computer device as a whole. In an embodiment, the processor 401 may include one or more processing cores. In an embodiment, the processor 401 may integrate an application processor and a modem processor, wherein the application processor mainly handles operating systems, user interfaces, applications, etc., and the modem processor mainly handles wireless communication. It can be understood that the modem processor described above may also not be integrated into the processor 401.

The memory 402 may be used to store software programs as well as modules, and the processor 401 performs various functional applications as well as vehicle control by executing the software programs as well as modules stored in the memory 402. The memory 402 may mainly include a storage program area and a storage data area, wherein the storage program area may store an operating system, an application required for at least one function (e.g., a sound playback function, an image playback function, etc.), and the like, and the storage data area may store data created according to the use of the computer device, and the like. Furthermore, the memory 402 may include a high-speed random access memory, and may also include a non-volatile memory, such as at least one disk memory device, a flash memory device, or other volatile solid state memory device. Accordingly, the memory 402 may also include a memory controller to provide access to the memory 402 by the processor 401.

The computer device also includes the power supply 403 to supply power to the various components. In an embodiment, the power supply 403 may be logically connected to the processor 401 via a power management system, so that functions such as managing charging and discharging, as well as power consumption management, can be realized via the power management system. The power supply 403 may also include one or more DC or AC power sources, a re-charging system, a power failure detection circuit, a power converter or inverter, a power status indicator, and any other components.

The computer device may also include an input unit 404, where the input unit 404 may be used to receive input numeric or character information, as well as to generate keyboard, mouse, joystick, optical, or trackball signal inputs related to user settings as well as function control.

Although not shown, the computer device may also include a display unit and the like, which will not be described herein. Specifically in this embodiment, the processor 401 in the computer device will load executable files corresponding to processes of one or more applications into the memory 402 in accordance with the following instructions, and the processor 401 will run the applications stored in the memory 402, so as to realize various functions, as follows:
collecting vehicle stream information within a preset distance range of a target vehicle, the vehicle stream information comprising at least the vehicle stream information of a first lane where the target vehicle is located and an adjacent second lane; determining traffic conditions of the first lane and the second lane according to the vehicle stream information; identifying a vehicle ahead and a vehicle behind that are close to the target vehicle in the second lane according to the vehicle stream information, when the traffic conditions are that the first lane is in a congested state and the second lane is in a smooth state; acquiring a first longitudinal distance between the vehicle ahead and the target vehicle and acquiring a second longitudinal distance between the vehicle behind and the target vehicle; and controlling the target vehicle to switch to the second lane for traveling, when both the first longitudinal distance and the second longitudinal distance are greater than a preset vehicle distance threshold.

The specific implementation of each of the above operations can refer to the preceding embodiments and will not be repeated herein.

As can be known from the above, the embodiments of the present application may collect the vehicle stream information of vehicles ahead of the vehicle's current lane and ahead of the adjacent lane(s), and acquire an average speed of the vehicles ahead therefrom. If speeds of the vehicles ahead with respect to the vehicle are lower than a certain value, while speeds of the passing vehicles ahead in the adjacent lane(s) are fast, it means that the adjacent lane(s) is(are) more smooth than the current traveling lane, and after acquiring the longitudinal distances between the vehicle and the vehicles ahead and behind in the adjacent lanes, it is determined that the longitudinal distances between the vehicles ahead and behind in the adjacent lane(s) are all at a safe distance, and the target vehicle can be controlled to safely switch to a smoother lane for traveling. In this way, congestion can be prejudged in advance and a safe lane change can be made to improve the vehicle's passage efficiency.

A person of ordinary skill in the art may understand that all or some of the steps in various methods of the above embodiments may be accomplished by instructions, or by controlling relevant hardware(s) through the instructions, which may be stored in a computer-readable storage medium and loaded and executed by a processor.

To this end, an embodiment of the present application provides a computer-readable storage medium having stored therein a plurality of instructions, which are capable of being loaded by a processor to perform steps in any of the vehicle control methods according to the embodiments of the present application. For example, the instructions may perform the steps of:
collecting vehicle stream information within a preset distance range of a target vehicle, the vehicle stream information comprising at least the vehicle stream information of a first lane where the target vehicle is located and an adjacent second lane; determining traffic conditions of the first lane and the second lane according to the vehicle stream information; identifying a vehicle ahead and a vehicle behind that are close to the target vehicle in the second lane according to the vehicle stream information, when the traffic conditions are that the first lane is in a congested state and the second lane is in a smooth state; acquiring a first longitudinal distance between the vehicle ahead and the target vehicle and acquiring a second longitudinal distance between the vehicle behind and the target vehicle; and controlling the target vehicle to switch to the second lane for traveling, when both the first longitudinal distance and the second longitudinal distance are greater than a preset vehicle distance threshold.

The specific implementation of each of the above operations can refer to the preceding embodiments and will not be repeated herein.

Herein, the computer-readable storage medium may include: read-only memory (ROM, Read Only Memory), random access memory (RAM, Random Access Memory), disk or CD-ROM, and the like.

The present application also provides a computer program product or computer program that includes computer instructions which are stored in a computer-readable storage medium. A processor of the computer device reads the computer instructions from the computer-readable storage medium, and the processor executes the computer instructions such that the computer device performs the vehicle control method according to various optional implementations of the above embodiments.

Since the instructions stored in the computer-readable storage medium can perform steps in any of the vehicle control methods according to the embodiments of the present application, the beneficial effects achievable by any of the vehicle control methods according to the embodiments of the present application can be realized, as described in detail in the preceding embodiments, and will not be repeated herein.

A vehicle control method and apparatus, a device, and a computer-readable storage medium provided in the above embodiments of the present application are described above in detail, and specific examples are used herein to illustrate the principles and implementations of the present application, and the above description of the embodiments are only used to assist in the understanding of the method of the present application and core ideas thereof, and meantime, for those skilled in the art, in accordance with the ideas of the present application, there will be some differences in the specific implementations and the scope of application. In summary, the contents of this specification should not be understood as a limitation of the application.

## Claims

1. A vehicle control method, wherein the vehicle control method comprises:
collecting vehicle stream information within a preset distance range of a target vehicle, the vehicle stream information comprising at least the vehicle stream information of a first lane where the target vehicle is located and an adjacent second lane;
determining traffic conditions of the first lane and the second lane according to the vehicle stream information;
identifying a vehicle ahead and a vehicle behind that are close to the target vehicle in the second lane according to the vehicle stream information, when the traffic conditions are that the first lane is in a congested state and the second lane is in a smooth state;
acquiring a first longitudinal distance between the vehicle ahead and the target vehicle and acquiring a second longitudinal distance between the vehicle behind and the target vehicle; and
controlling the target vehicle to switch to the second lane for traveling, when both the first longitudinal distance and the second longitudinal distance are greater than a preset vehicle distance threshold.

2. The method according to claim 1, wherein the determining traffic conditions of the first lane and the second lane according to the vehicle stream information, comprises:
determining a first vehicle stream speed in front of the target vehicle in the first lane based on the vehicle stream information, and determining the traffic condition of the first lane according to the first vehicle stream speed; and
determining a second vehicle stream speed in front of the target vehicle in the second lane based on the vehicle stream information, and determining the traffic condition of the second lane according to the second vehicle stream speed.

3. The method according to claim 2, wherein the traffic conditions comprise a congested state and a smooth state, and the determining the traffic condition of the first lane according to the first vehicle stream speed comprises:
comparing the first vehicle stream speed with a preset vehicle speed threshold;
determining that the traffic condition of the first lane is the congested state if the first vehicle stream speed is less than the preset vehicle speed threshold; and
determining that the traffic condition of the first lane is the smooth state if the first vehicle stream speed is greater than or equal to the preset vehicle speed threshold.

4. The method according to claim 3, wherein the determining the traffic condition of the second lane according to the first vehicle stream speed and the second vehicle stream speed, comprises:
determining a speed difference between the second vehicle stream speed and the first vehicle stream speed, and determining a speed ratio between the second vehicle stream speed and the first vehicle stream speed;
determining that the traffic condition of the second lane is the smooth state if the speed difference is greater than a preset speed difference threshold and the speed ratio is greater than a preset speed ratio threshold; and
determining that the traffic condition of the second lane is the congested state if the speed difference is less than the preset speed difference threshold or the speed ratio is less than the preset speed ratio threshold.

5. The method according to claim 1, wherein the identifying the vehicle ahead and the vehicle behind that are close to the target vehicle in the second lane according to the vehicle stream information, comprises:
acquiring a set of images corresponding to the current vehicle stream information;
selecting a first image containing information on the vehicle ahead of the target vehicle, and selecting a second image containing information on the vehicle behind of the target vehicle, from the set of images;
identifying the vehicle ahead that is close to the target vehicle in the second lane from the first image; and
identifying the vehicle behind that is close to the target vehicle in the second lane from the second image.

6. The method according to claim 1, wherein the acquiring the first longitudinal distance between the vehicle ahead and the target vehicle, comprises:
identifying a target distance between the vehicle ahead and the target vehicle within a preset duration;
determining a positional distribution relationship between the vehicle ahead and the target vehicle; and
determining the first longitudinal distance between the vehicle ahead and the target vehicle according to the target distance and the positional distribution relationship.

7. The method according to claim 1, wherein before the controlling the target vehicle to switch to the second lane for traveling, the method further comprises:
acquiring a current travel planning path of the target vehicle, and building a pre-planned path of the target vehicle on the second lane according to the travel planning path; and
determining a path distance corresponding to the pre-planned path,
then the controlling the target vehicle to switch to the second lane for traveling, comprises:
if the path distance is greater than or equal to a preset distance threshold, controlling the target vehicle to switch to the second lane for traveling.

8. The method according to any one of claims 1 to 6, wherein before the controlling the target vehicle to switch to the second lane for traveling, the method further comprises:
acquiring a current travel planning path of the target vehicle, and determining a traveling control strategy for the target vehicle within a preset path distance according to the travel planning path; and
determining a first priority of the first lane and a second priority of the second lane according to the traveling control strategy,
then the controlling the target vehicle to switch to the second lane for traveling, comprises:
if the second priority is greater than or equal to the first priority, controlling the target vehicle to switch to the second lane for traveling.

9. A vehicle control apparatus, wherein the vehicle control apparatus comprises:
a collection unit for collecting vehicle stream information within a preset distance range of a target vehicle, the vehicle stream information comprising at least the vehicle stream information of a first lane where the target vehicle is located and an adjacent second lane;
a determination unit for determining traffic conditions of the first lane and the second lane according to the vehicle stream information;
an identification unit for identifying a vehicle ahead and a vehicle behind that are close to the target vehicle in the second lane according to the vehicle stream information, when the traffic conditions are that the first lane is in a congested state and the second lane is in a smooth state;
an acquisition unit for acquiring a first longitudinal distance between the vehicle ahead and the target vehicle and acquiring a second longitudinal distance between the vehicle behind and the target vehicle; and
a control unit for controlling the target vehicle to switch to the second lane for traveling, when both the first longitudinal distance and the second longitudinal distance are greater than a preset vehicle distance threshold.

10. A computer device, wherein the computer device comprises a processor and a memory, the memory storing a computer program, the processor being used to execute the computer program in the memory to implement steps in the vehicle control method according toany one of claims 1 to 8.

11. A computer-readable storage medium, wherein the computer-readable storage medium is computer-readable and stores a plurality of instructions, which are adapted to be loaded by a processor to perform steps in the vehicle control method according toany one of claims 1 to 8.
